# EUROPÄISCHE PATENTSCHRIFT

(11) **EP 1 502 016 B1**
(45) Veröffentlichungstag und Bekanntmachung des Hinweises auf die Patenterteilung: **25.10.2006**
(21) Anmeldenummer: 03706261.9
(22) Anmeldetag: 30.01.2003
(51) Int. Cl.: F01N 11/00

(54) **VORRICHTUNG UND VERFAHREN ZUR FESTSTELLUNG EINER FEHLFUNKTION EINES FILTERS**
DEVICE AND METHOD FOR DETERMINING A MALFUNCTION IN A FILTER
DISPOSITIF ET PROCEDE PERMETTANT DE DETERMINER UN DEFAUT DE FONCTIONNEMENT D'UN FILTRE

(30) Priorität: 24.04.2002 DE 10218218
(43) Veröffentlichungstag der Anmeldung: 02.02.2005
(73) Patentinhaber: ROBERT BOSCH GMBH, 70442 Stuttgart (DE)
(72) Erfinder: SCHULTE, Thomas, 70376 Stuttgart (DE); SCHUMANN, Bernd, 71277 Rutesheim (DE)
(86) Internationale Anmeldenummer: PCT/DE2003/000246
(87) Internationale Veröffentlichungsnummer: WO 2003/091553

(56) Entgegenhaltungen:
- DE-A- 19 853 841
- DE-C- 4 139 325
- FR-A- 2 802 241
- US-A1- 2001 013 220
- PATENT ABSTRACTS OF JAPAN vol. 2002, no. 08, 5. August 2002 (2002-08-05) & JP 2002 115526 A (ISUZU CERAMICS RES INST CO LTD), 19. April 2002 (2002-04-19)

## Beschreibung

### Stand der Technik

Die vorliegendende Erfindung betrifft eine Vorrichtung und ein Verfahren zur Feststellung einer Fehlfunktion eines Filters nach dem Oberbegriff des Patentanspruchs 1 bzw. des Patentanspruchs 7.

Insbesondere bei Diesel-Verbrennungsmaschinen ist es von großer Bedeutung, das Niveau von an die Umgebung abgeführten Rußpartikeln möglichst niedrig zu halten. Hierzu ist es zweckmäßig, den Ausstoß von Rußpartikeln im Betriebszustand der Verbrennungsmaschine durch Anordnung eines Sensors im Abgasstrang zu überwachen. Der Sensor kann dabei stromab oder stromauf eines in dem Abgasstrang angeordneten Rußfilters eingebracht sein. Wenn der Sensor stromab des Rußfilters in den Abgasstrang eingebracht ist, kann der Sensor auch zur Überprüfung der Funktionsfähigkeit des Rußfilters herangezogen werden.

Ferner erweist es sich als zweckmäßig, die Konzentration an Rußpartikeln in einem Abgas einer Verbrennungsmaschine kontinuierlich, d. h. im Standardbetrieb des Motors, zu messen, um Veränderungen im Motorverhalten, beispielsweise aufgrund einer Fehlfunktion, unmittelbar detektieren zu können.

Ein Sensor der einleitend genannten Art ist aus der DE 198 53 841 A1 bekannt. Dieser Sensor dient insbesondere zur Detektion von Rußpartikeln in einem Abgasstrang eines Kraftfahrzeuges mit einer Diesel-Verbrennungsmaschine und umfasst eine erste Elektrode bzw. Mittelelektrode, die mit einer Hochspannungsquelle verbunden ist, sowie eine zweite Elektrode bzw. Masseelektrode, die auf dem gleichen Potential wie der aus Metall gefertigte Abgasstrang liegt. Als Maß für die Konzentration von Rußpartikeln in dem Abgas wird entweder das Minimalniveau derjenigen elektrischen Spannung, bei der Funken zwischen den beiden Elektroden auftreten, oder aber bei konstant gehaltener elektrischer Spannung die Größe des zwischen den beiden Elektroden fließenden Ionisationsstroms herangezogen.

US 2001/0013220 zeigt einen weiteren Sensor zur Detektion von Rußpartikeln, sowie ein Verfahren zur Feststellung einer Fehlfunktion eines Partikelfilters mit diesem Sensor.

Bei zusammen mit Dieselmotoren, aber auch bei anderen Verfahren zur Partikelrückhaltung, eingesetzten Filtern kann die Erkennung einer Belegung oder eines Verstopfens des Filters nach dem Stand der Technik durch eine Differenzdruckmessung erfolgen, wobei die Druckdifferenz vor und hinter dem Filter gemessen wird. Es sind bislang jedoch noch keine insbesondere für einen Serieneinsatz im Kraftfahrzeugbereich tauglichen Verfahren bekannt, mit denen es möglich ist, kleine Leckagen oder Risse in einem derartigen Rußfilter während des Betriebes zu messen. Derartige Leckagen oder Risse verschlechtern jedoch die Qualität einer Differenzdruckmessung durch einen Druckausgleich und erhöhen den Partikelausstoß erheblich.

Die vorliegende Erfindung strebt an, eine Möglichkeit zur möglichst ständigen Kontrolle eines Rückhaltegrades eines Filters zur Verfügung zu stellen, ohne hierbei auf die durch Leckagen störanfällige Differenzdruckmessung angewiesen zu sein. Insbesondere wird angestrebt, auch kleine Leckagen zuverlässig zu detektieren.

### Vorteile der Erfindung

Dieses Ziel wird erreicht durch eine Vorrichtung mit den Merkmalen des Patentanspruchs 1 sowie ein Verfahren mit den Merkmalen des Patentanspruchs 7.

Erfindungsgemäß ist es nun in unaufwendiger Weise möglich, Fehlfunktionen eines Filters, insbesondere eines einem Dieselmotor nachgeschalteten Rußfilters, zu erkennen. Durch die erfindungsgemäße In-Beziehung-Setzung der Konzentrationsschwankungen einer Gaskomponente in dem zu reinigenden Gasstrom außerhalb der erfindungsgemäß in den Gasstrom eingebrachten Kammer mit den entsprechenden Schwankungen innerhalb der Kammer können Verstopfungen des Filters sicher erkannt werden. Die Erkennung der Fehlfunktionen umfasst insbesondere auch die Erkennung von kleinen Leckagen oder Rissen in dem Filter.

Vorteilhafte Ausgestaltungen der erfindungsgemäßen Vorrichtung bzw. des erfindungsgemäßen Verfahrens sind Gegenstand der Unteransprüche.

Es erweist sich als zweckmäßig, die Kammer stromabwärtig des zu überwachenden Filters in den zu reinigenden Gasstrom einzubringen. Vergleicht man die Konzentrationsschwankungen einer Gaskomponente beispielsweise im Rahmen einer Fourier-Analyse, stellt man fest, dass das sich hierbei ergebende Frequenzspektrum in der Kammer dem Frequenzspektrum eines Tiefpasses entspricht. Die Grenzfrequenz des Tiefpasses ist hierbei abhängig von dem Beladungsgrad des zu überwachenden Filters mit Ruß.

Insbesondere bei der Feststellung einer Fehlfunktion eines einem Dieselmotor nachgeschalteten Rußpartikelfilters erweist es sich als zweckmäßig, mit den beiden Gassensoren die Sauerstoffkonzentration in dem Abgas zu messen. Sauerstoffsensoren sind in preiswerter Weise verfügbar. Es erweist sich, dass die Messung von Sauerstoffkonzentrationsschwankungen zu besonders zuverlässigen Feststellungen einer Fehlfunktion des Filters führt.

Vorteilhafterweise wird der die Kammer verschließende Filterkörper frontseitig angeströmt.

Gemäß einer weiteren bevorzugten Ausgestaltung der erfindungsgemäßen Vorrichtung weist diese eine den Filterkörper der Kammer beaufschlagende Heizeinrichtung auf. Durch eine derartige Heizeinrichtung kann beispielsweise den Filterkörper der Kammer verstopfender. Ruß wieder verbrannt werden, so dass der Zustand des Filters und der mit diesem einhergehende ursprüngliche Frequenzgang wieder hergestellt werden kann. Mittels dieser Maßnahme ist insbesondere feststellbar, ob das Verstopfen des Filterkörpers der Kammer aufgrund eines einmaligen Ereignisses erfolgte, oder ob der zu überwachende Filter dauerhaft geschädigt ist.

Gemäß einer bevorzugten Ausführungsform des erfindungsgemäßen Verfahrens werden der Frequenzverlauf und die Frequenzverteilung der Signale der beiden Gassensoren über einen Zeitraum aufgezeichnet und miteinander in Beziehung gesetzt. Hierdurch ist es möglich, das Auftreten von Fehlfunktionen des zu überwachenden Filters in einfacher und zeitnaher Weise festzustellen.

Es ist bevorzugt, dass eine Fehlfunktion des zu überwachenden Filters über die Bestimmung einer Grenzfrequenz des in der Kammer vorgesehenen Sensors festgestellt wird. Hierbei wird ausgenutzt, dass das Frequenzspektrum des in die Kammer eingesetzten Sensors dem Spektrum eines Tiefpasses entspricht. Man stellt fest, dass die Grenzfrequenz dieses Tiefpassfilters mit zunehmender Verstopfung des zu überwachenden Filterkörpers bzw. Filters abnimmt.

### Zeichnung

Die Erfindung wird nun unter Bezugnahme auf die beigefügte Zeichnung weiter beschrieben. In dieser zeigt
- Figur 1: eine schematische Darstellung eines Abgastraktes mit einem Ausführungsbeispiel der erfindungsgemäßen Vorrichtung, und
- Fig. 2: die mittels eines in der in Figur 1 dargestellten Kammer angeordneten Sensors festgestellten Frequenzgänge einer Sauerstoffkonzentration in Abhängigkeit von einem Verstopfungszustand eines zu überwachenden Filter.

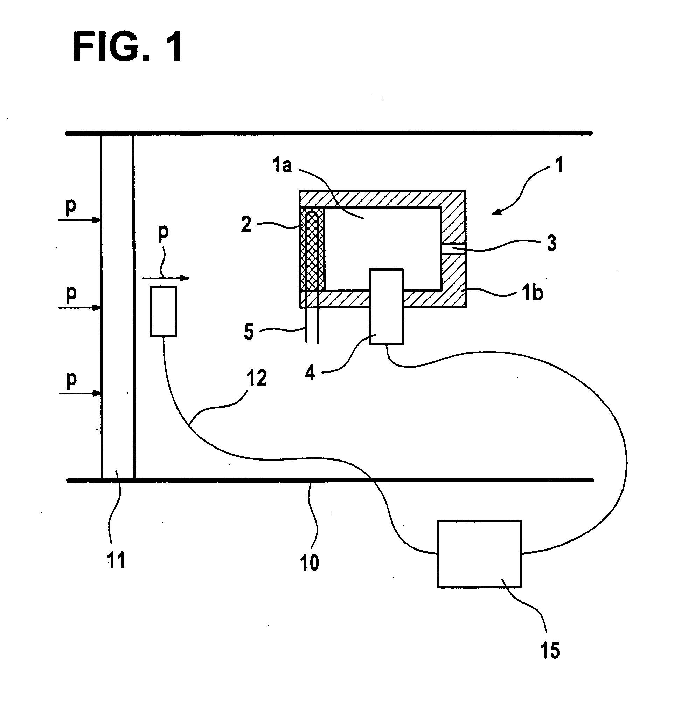

In Fig. 1 ist eine im Rahmen der erfindungsgemäßen Vorrichtung vorgesehene Kammer insgesamt mit 1 bezeichnet. Die Kammer 1 wird an einer Seite von einem Filterkörper 2, und im übrigen von einer Wandung 1b begrenzt. Der so definierte Innenraum (Totvolumen) der Kammer ist mit 1a bezeichnet. Die so ausgebildete Kammer wird in einen Abgastrakt 10 eines Dieselmotors stromabwärts von einem zu überwachenden Rußfilter 11 angeordnet. Es sei an dieser Stelle betont, dass sämtliche dargestellten Bauteile rein schematisch dargestellt sind. Die Strömungsrichtung des Abgases in dem Abgastrakt ist mittels der Pfeile P verdeutlicht.

Man erkennt, dass der Filterkörper 2 frontseitig von dem Abgas angeströmt wird. Auf ihrer Rückseite weist die Kammer 1 eine Ausströmöffnung 3 auf, aus welcher über den Filterkörper 2 in den Raum 1a eingetretenes Abgas bzw. Gas wieder aus diesem austreten kann.

Die dargestellte Kammer 1 ist ferner mit einem Abgassensor 4 ausgebildet, welcher beispielsweise die Sauerstoffkonzentration im Abgas messen kann.

In dem Filterkörper 2 ist eine Heizvorrichtung 5 ausgebildet, mittels der in dem Filterkörper 2 angelagerter Ruß wieder verbrannt werden kann.

Zwischen dem zu überwachenden Rußfilter 11 und der Kammer 1 ist ein weiterer Gassensor 12 angeordnet. Die Messergebnisse der Sensoren 4 und 12 sind auf eine Rechner- und Auswerteeinheit 15 übertragbar, welche außerhalb oder innerhalb des Abgastraktes angeordnet ist.

Im Idealfall ist der durch den Rußfilter 11 hindurchgetretene Abgasstrom partikelfrei. Dieser partikelfreie Abgasstrom tritt anschließend durch den Filterkörper 2 in die Kammer 1 ein, und anschließend aus der Austrittsöffnung 3 hinten aus dieser wieder aus.

Die Gassensoren 4 und 12 detektieren die Konzentrationsschwankungen einer Abgaskomponente, vorzugsweise des Sauerstoffs, in der Kammer bzw. zwischen Rußfilter 11 und Kammer 1 im Abgastrakt 10.

Der Filterkörper 2 weist vorzugsweise in etwa den gleichen Aufbau wie der Rußfilter 11 auf.

Die Signale der Gassensoren 4 und 12 werden mittels der Rechner- und Auswerteeinheit 15 in ihrem Frequenzverlauf und ihrer Frequenzverteilung (Frequenzspektrum) über eine bestimmte Zeitdauer, beispielsweise eine Zeitdauer von 1 bis 10 min. aufgezeichnet. Bringt man die Frequenzverteilungen der jeweiligen Sensorsignale in geeigneter Weise in Korrelation, stellt man fest, dass die Kammer 1 als Tiefpass wirkt, d. h. das Frequenzspektrum des Gassensors 4 weist ab einer bestimmten Grenzfrequenz im Vergleich zu dem durch den Gassensor 12 aufgezeichneten Frequenzspektrum einen starken Abfall auf.

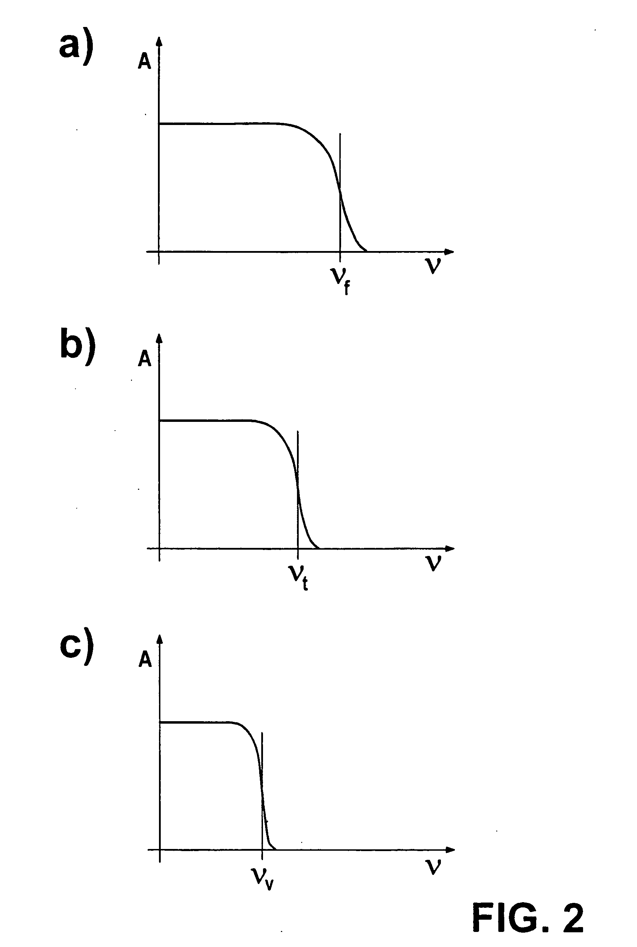

Dieser Sachverhalt ist in Fig. 2 dargestellt. In den Figuren 2a bis 2c sind, jeweils für unterschiedliche Beladungszustände, Frequenzgänge, d. h. Amplitude A aufgetragen gegen Frequenz v, der Sauerstoffkonzentration in der Kammer 1 dargestellt. Für jeden dargestellten Beladungszustand ist eine die Tiefpasswirkung der Kammer charakterisierende Grenzfrequenz ν_{f} bzw. νₜ bzw. νᵥ explizit eingezeichnet.

Fig. 2a zeigt hierbei beispielhaft den Frequenzgang der Sauerstoffkonzentration in der Kammer bei freiem, d. h. nicht verstopftem Filterkörper 2.

Vergleicht man diesen Frequenzgang mit dem Frequenzgang der Sauerstoffkonzentration der Kammer bei teilbeladenem Filterkörper, stellt man fest, dass die Grenzfrequenz ν_{f} (siehe Figur 2a) größer ist als die Grenzfrequenz νₜ bei teilbeladenem Filterkörper (siehe Figur 2b). Bei vollständig verstopftem Filterkörper tritt dieser Effekt verstärkt auf, wie anhand der Grenzfrequenz νᵥ in Fig. 2c ersichtlich ist, in welcher der Frequenzgang der Sauerstoffkonzentration in der Kammer bei vollständig verstopftem Filterkörper dargestellt ist.

Insgesamt stellt man fest, dass bei einer Verstopfung des Filterkörpers 2 der Kammer 1 mit Partikeln die Tiefpasseigenschaften dieser Kammer hinsichtlich der Gaskonzentrationsschwankungen sich sehr schnell dahingehend verändern, dass die obere Grenzfrequenz sinkt. Dies wird, wie erläutert, vorteilhaft mittels einer Auswertung des Spektrums der Gaskonzentrationsschwankungen beobachtet. Stellt man nun über das dargestellte Verfahren einen teilbeladenen oder verstopften Filter fest, kann mittels der Heizvorrichtung 5 der in dem Filterkörper 2 angelagerte Ruß wieder verbrannt werden, so dass der ursprüngliche Frequenzgang (Grenzfrequenz ν_{frei}) wiederhergestellt werden kann. Stellt man anschließend fest, dass bereits nach kurzer Zeit die Grenzfrequenz wieder abnimmt, kann auf einen Defekt bzw. eine Fehlfunktion des Rußfilters 11 geschlossen werden. Kommt es jedoch zu keinem neuerlichen Absinken der Grenzfrequenz, kann davon ausgegangen werden, dass die Verstopfung des Filterkörpers 2 auf einem einmaligen Effekt, beispielsweise einer Kraftstoffverunreinigung, beruht hat.

Die Kammer 1 ist vorzugsweise zylindrisch und über den Gassensor 4 aufgebaut. Wie erwähnt, ist dabei der Filterkörper 2 zweckmäßigerweise dem Abgasstrom zugewandt. Der Raum 1a (Totvolumen) und die Ausströmöffnung 3 können so bemessen werden, dass es bei verstopftem Filter zu Zeitkonstanten von 5 bis 200 Sekunden kommt. Eine Kammer mit freiem Filterkörper sollte zweckmäßigerweise Zeitkonstanten von kleiner als 10 Sekunden aufweisen, so dass die Zeitabschnitte für die Aufnahmen von Spektren der Konzentrationsschwankungen nicht zu lange Aufnahmedauern erfordern.

Es sei darauf hingewiesen, dass die erfindungsgemäße Feststellung von Fehlfunktionen des Rußfilters 11 auch mittels anderer, hier nicht im einzelnen dargestellter Korrelationsverfahren für die Signale der Gassensoren 4 und 12 bewerkstelligt werden kann.

## Patentansprüche

1. Vorrichtung zur Feststellung einer Fehlfunktion eines zur Reinigung eines Gasstromes, insbesondere eines Abgasstromes von Rußpartikeln, dienenden Filters (11),
**gekennzeichnet durch**
eine zusätzlich zu dem Filter (11) in den zu reinigenden Gasstrom einbringbare Kammer (1), welche wenigstens teilweise mit einem Filterkörper (2) verschlossen ist und wenigstens eine Öffnung (3) aufweist, aus welcher **durch** den Filterkörper (2) in die Kammer (1) eintretendes Gas wieder aus dieser austreten kann, wobei in der Kammer (1) wenigstens ein Gassensor (4) zur Feststellung der Konzentration wenigstens einer Komponente des zu reinigenden Gases, und außerhalb der Kammer (1) wenigstens ein zweiter Gassensor (12) zur Feststellung der Konzentration der wenigstens einen Komponente des zu reinigenden Gases angeordnet ist.

2. Vorrichtung nach Anspruch 1, **dadurch gekennzeichnet, dass** die Kammer (1) in einem Abgastrakt stromabwärtig des zu reinigenden Filters (11) in den zu reinigenden Gasstrom eingebracht ist.

3. Vorrichtung nach einem der Ansprüche 1 oder 2, **dadurch gekennzeichnet, dass** mittels der Gassensoren (4, 12) die Konzentration von in dem zu reinigenden Gas enthaltenem Sauerstoff festgestellt wird.

4. Vorrichtung nach einem der vorstehenden Ansprüche, **dadurch gekennzeichnet, dass** die Kammer (1) derart in dem Gasstrom angeordnet ist, dass der Filterkörper (2) frontseitig angeströmt wird.

5. Vorrichtung nach einem der vorstehenden Ansprüche, **gekennzeichnet durch** eine den Filterkörper (2) beaufschlagende Heizeinrichtung (5).

6. Vorrichtung nach einem der vorstehenden Ansprüche, **gekennzeichnet durch** eine mit den Gassensoren (4, 12) in Wirkverbindung stehende Rechner- und Auswerteeinheit (15).

7. Verfahren zur Feststellung einer Fehlfunktion eines zur Reinigung eines Gasstromes dienenden Filters (11)
**dadurch gekennzeichnet,**
**dass** unter Verwendung einer Vorrichtung nach einem der vorstehenden Ansprüche eine Korrelation zwischen den durch die Gassensoren (4, 12) aufgenommenen Messwerten bereitgestellt wird und auf der Grundlage dieser Korrelation eine Fehlfunktion des Filters (11) festgestellt wird.

8. Verfahren nach Anspruch 7, **dadurch gekennzeichnet, dass** der Frequenzverlauf und die Frequenzverteilung, d.h. das Frequenzspektrum der Messungen der Sensoren (4, 12) über einen Zeitraum aufgezeichnet werden und miteinander in Beziehung gesetzt werden.

## Claims

1. Device for determining a malfunction of a filter (11) used for purifying a gas flow, in particular an exhaust gas flow in respect of soot particles, **characterized by** a chamber (1) that can be fitted as well as the filter (11) in the gas flow to be purified, which is at least partially closed by a filter body (2) and comprises at least one opening (3) from which the gas entering through the filter body (2) into the chamber (1) can leave it again, at least one gas sensor (4) for determining the concentration of at least one component of the gas to be purified being arranged in the chamber (1) and at least one second gas sensor (12) for determining the concentration of the at least one component of the gas to be purified being arranged outside the chamber (1).

2. Device according to Claim 1, **characterized in that** the chamber (1) is fitted downstream of the filter (11) to be purified in the gas flow to be purified in an exhaust gas section.

3. Device according to one of Claims 1 and 2, **characterized in that** the concentration of oxygen contained in the gas to be purified is determined by means of the gas sensors (4, 12).

4. Device according to one of the preceding claims, **characterized in that** the chamber (1) is arranged in the gas flow so that it flows past the front side of the filter body (2).

5. Device according to one of the preceding claims, **characterized by** a heater (5) acting on the filter body (2).

6. Device according to one of the preceding claims, **characterized by** a computation and evaluation unit (15) in active connection with the gas sensors (4, 12).

7. Method for determining a malfunction of a filter (11) used for purifying a gas flow, **characterized in that** a correlation between the measurement values recorded by the gas sensors (4, 12) is obtained by using a device according to one of the preceding claims, and a malfunction of the filter (11) is determined on the basis of this correlation.

8. Method according to Claim 7, **characterized in that** at the frequency profile and the frequency distribution i.e. frequency spectrum of the measurements of the sensors (4, 12) are recorded over a period of time and related to each other.

## Revendications

1. Dispositif pour déterminer un défaut de fonctionnement d'un filtre (11) servant à épurer un courant gazeux, notamment à retirer des particules de suie d'un courant de gaz d'échappement,
**caractérisé en ce qu'**
il comporte une chambre (1) montée en plus du filtre (11) dans le courant gazeux à épurer, elle est obturée au moins partiellement par un corps de filtre (2) et présente au moins une ouverture (3) à travers laquelle le gaz qui y est entré à travers le corps de filtre (2), peut à nouveau en sortir et dans cette chambre (1) est disposé au moins un capteur de gaz (4) pour déterminer la concentration d'au moins un composant du gaz à épurer, tandis qu'à l'extérieur se trouve au moins un second capteur de gaz (12) pour déterminer la concentration du composant considéré du gaz à épurer.

2. Dispositif selon la revendication 1,
**caractérisé en ce que**
la chambre (1) est montée en aval du filtre (11) à nettoyer, dans une ligne de gaz d'échappement du courant gazeux à épurer.

3. Dispositif selon la revendication 1 ou 2,
**caractérisé en ce que**
la concentration de l'oxygène contenue dans le gaz à épurer est déterminée par les capteurs de gaz (4, 12).

4. Dispositif selon une des revendications précédentes,
**caractérisé en ce que**
la chambre (1) est montée dans le courant gazeux de manière que le gaz pénètre frontalement dans le corps de filtre (2).

5. Dispositif selon une des revendications précédentes,
**caractérisé en ce qu'**
un dispositif de chauffage (5) actionne le corps de filtre (2).

6. Dispositif selon une des revendications précédentes,
**caractérisé en ce qu'**
une unité de calcul et d'évaluation (15) est en liaison active avec les capteurs de gaz (4, 12).

7. Procédé pour déterminer un défaut de fonctionnement d'un filtre (11) servant à épurer un courant gazeux,
**caractérisé en ce qu'**
en utilisant un dispositif selon une des revendications précédentes, une corrélation est établie entre les valeurs mesurées reçues par les capteurs de gaz (4, 12) et cette corrélation sert de base pour déterminer un défaut de fonctionnement du filtre (11).

8. Procédé selon la revendication 7,
**caractérisé en ce que**
l'évolution et la distribution de la fréquence, c'est-à-dire le spectre de fréquence des mesures des capteurs (4, 12) sont établies sur un intervalle de temps et mises en relation entre elles.
